# FASCICULE DE BREVET EUROPEEN

(11) **EP 0 650 748 B1**
(45) Date de publication et mention de la délivrance du brevet: **06.05.1998**
(21) Numéro de dépôt: 94402428.0
(22) Date de dépôt: 27.10.1994
(51) Int. Cl.: B01D 3/00, F25J 3/04

(54) **Distributeur de liquide pour dispositif d'échange de chaleur et de matière, colonne de distillation comprenant un tel distributeur, et utilisation d'une telle colonne pour la distillation de l'air**
Flüssigkeitsverteiler für einen Wärmetauscher und Stoffaustauscher, Distillationskolonne mit einem solchen Verteiler und Anwendung einer derartigen Kolonne zur Luftzerlegung
Liquid distributor for a heat exchanger and mass transfer, distillation column with such a distributor and use of such a column for air distillation

(30) Priorité: 29.10.1993 FR 9312948
(43) Date de publication de la demande: 03.05.1995
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Lehman, Jean-Yves, F-94700 Maisons Alfort (FR)
(74) Mandataire: Le Moenner, Gabriel

(56) Documents cités:
- EP-A- 0 153 974
- EP-A- 0 563 900
- WO-A-92/13620
- US-A- 3 431 084

## Description

La présente invention concerne un distributeur de liquide pour dispositif d'échange de chaleur et de matière, le dispositif ayant une interface supérieure constituant une aire d'arrosage, le distributeur comprenant des passages de gaz et une pluralité de passages de liquide.

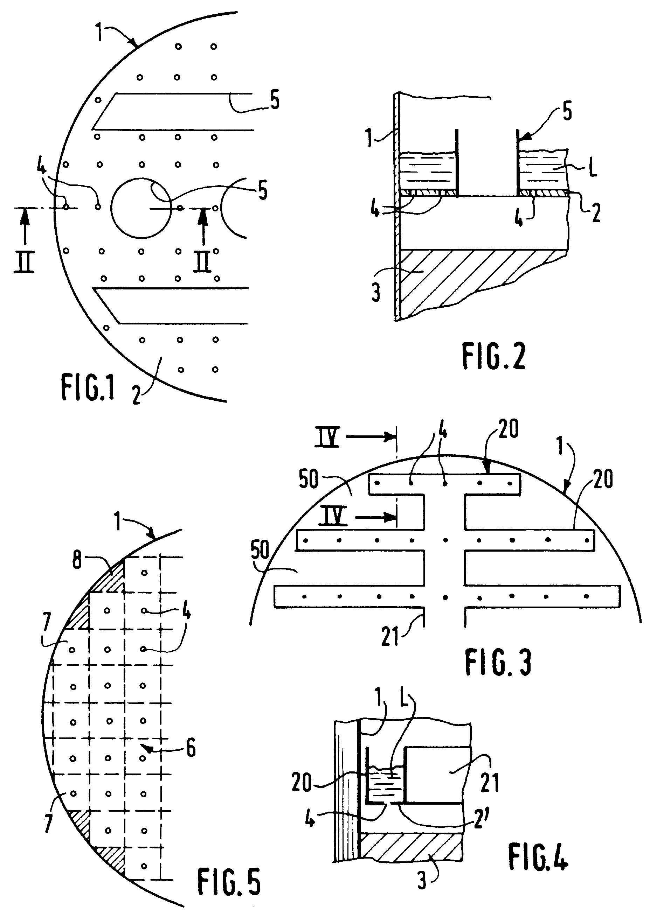

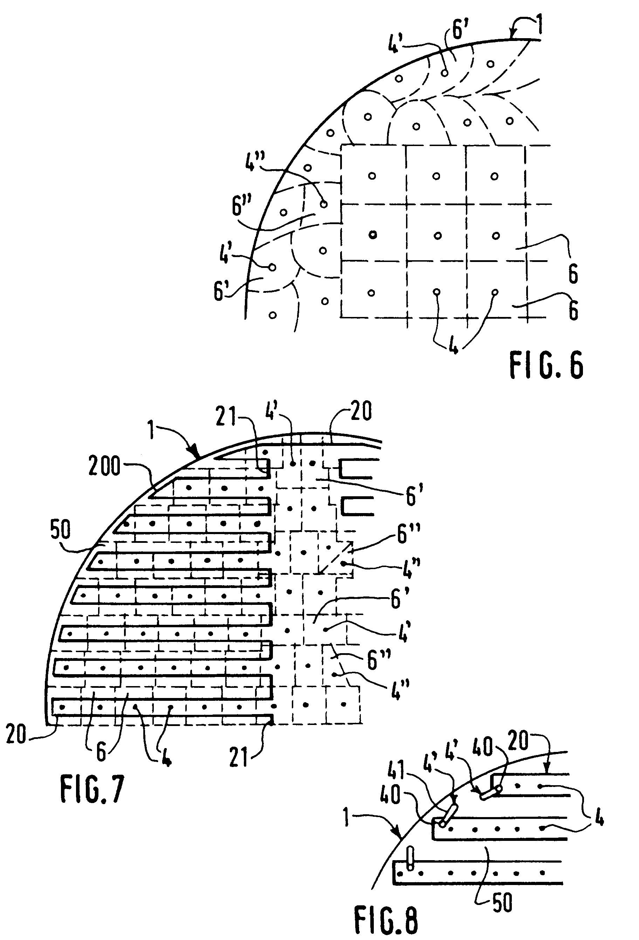

Des distributeurs pour dispositifs d'échange de chaleur et de matière de ce type sont décrits par exemple dans les documents FR-A-2.121.185 et EP-A-0.491.591. Dans la pratique, en particulier dans les colonnes de distillation d'air à garnissages, on utilise deux types de distributeurs, tels que décrits sur les figures 1 à 4 ci-après. Un premier type, décrit sur les figures 1 et 2, comporte, disposée transversalement dans la virole 1 de la colonne, une structure plane 2, constituée avantageusement par les fonds coplanaires de goulottes parallèles accolées, s'étendant au-dessus du dispositif d'échange de matière et de chaleur 3, avantageusement constitué de garnissages, en vrac ou structurés -typiquement à structure dite ondulé-croisé tels que décrits dans le document EP-A-0.367.817 au nom de la Demanderesse. La structure 2, avec les goulottes communiquant les unes avec les autres, notamment à la périphérie de la structure 2, forme réserve d'accumulation d'une quantité de liquide L et comporte de nombreux orifices 4 pour la distribution du liquide par gravité sur l'aire d'arrosage du dispositif 3. La structure 2 comporte une série de cheminées 5 circulaires ou oblongues, comme représenté sur la figure 1, permettant le passage de gaz vers le haut au travers du distributeur. Dans l'autre type de distributeur, représenté sur les figures 3 et 4, le distributeur de liquide comprend une série de goulottes ou de tubes parallèles écartés 20 les uns des autres, alimentés centralement en liquide et reliés ou non par une ou plusieurs goulottes transversales 21, les différentes goulottes formant la réserve de liquide L et ménageant entre elles des espaces 50 pour le passage du gaz. Les goulottes 20 forment à leur extrémité inférieure une surface 2' parallèle à la surface supérieure du dispositif 3 et dans laquelle sont formés les orifices de déversement 4. Dans l'un ou l'autre des deux types, les orifices 4 sont formés, comme représenté sur les figures 1 et 3, suivant des motifs réguliers (orifices alignés suivant des rangées parallèles) sans se préoccuper particulièrement des zones de déversement au voisinage de la virole 1. Pour des raisons de commodité de fabrication, les orifices 4 ont de préférence des sections identiques. Or, comme représenté sur la figure 5, en relation avec le type de distributeur selon les figures 1 et 2, si les orifices 4 sont répartis suivant un motif régulier avec maillage régulier de surfaces d'arrosage, figurées par les rectangles en pointillés 6 sur la figure 5, on constate qu'au voisinage du contour périphérique du distributeur, défini typiquement par la virole 1 d'une colonne, certaines zones du maillage d'orifices 4, telles que celles représentées en 7, ont une surface "amputée", ce qui signifie que les malles concernées ont, comparativement, un débit local supérieur à celui des autres orifices du maillage régulier, alors que d'autres zones, telles que celles figurées en 8, sont dépourvues d'orifice de déversement et constituent donc des zones "sèches", ces deux conditions contribuant à dégrader localement le rapport débit de gaz/débit de liquide dans la colonne. Une solution pour remédier à ces inconvénients consisterait à augmenter le nombre d'orifices de façon à réduire le pas du motif régulier de points, en réduisant en conséquence le diamètre des orifices pour conserver la garde de liquide L dans le distributeur. Cette solution est cependant inappropriée dans la mesure où elle augmente considérablement les coûts de fabrication et limite la précision du débit de déversement de liquide en raison des difficultés de réalisation d'orifices précis de petite section, ce qui milite a contrario pour la réalisation d'orifices de grand diamètre, les problèmes de débit de liquide étant rendus encore plus aigus par les risques accrus de bouchage ou de colmatage des orifices de section réduite. Une autre approche consisterait à réaliser, en zone périphérique, des orifices de différents diamètres adaptés : réduits dans des zones telles que 7 ou accrus au voisinage de zones telles que 8. Cette solution est également inadaptée dans la mesure où elle nécessiterait la réalisation d'un grand nombre, généralement supérieur à 10, de sections d'orifices différentes, ce qui augmenterait considérablement les coûts de fabrication du fait de la nécessité de disposer d'outils de perçage multiples ou sophistiqués, au détriment par ailleurs de la précision du débit de liquide et en exposant les orifices de plus petites sections au risque de bouchage.

On connait aussi par EP-A-0 563 900 un distributeur de liquide pour dispositif d'échange de chaleur et de matière ayant une interface supérieure constituant une aire d'arrosage, comprenant des passages de gaz et une pluralité de passages de liquide définis par des orifices de section donnée. La Fig.3 de ce document montre une répartition partiellement irrégulière des orifices près de la périphérie de l'aire d'arrosage.

Rien n'est indiqué cependant dans ce document sur une telle irrégularité ni sur l'effet que l'on en attend.

La présente invention a pour objet de proposer un distributeur de précision permettant, de façon simple, souple, fiable et peu onéreuse, d'augmenter la régularité du débit de liquide déversé, en réduisant les risques de bouchage.

Pour ce faire, l'invention propose un distributeur tels que revendiqués et une colonne de distillation.

L'invention concerne également l'utilisation d'une colonne telle que revendiqué pour la distillation de l'air.

Suivant une caractéristique particulière, les orifices ont une section sensiblement constante, correspondant à une section de passage nominale d'un orifice circulaire de diamètre typiquement compris entre 2 et 10 mm, avantageusement entre 3 et 5 mm, et sont répartis suivant un motif de points d'arrosage à pas surfacique sensiblement constant sur l'aire d'arrosage.

Cet agencement selon l'invention permet de traiter efficacement les problèmes des bords du distributeur, avec une gamme de sections d'orifices réduite, notamment avec des orifices à section de passage unique, tout en permettant simultanément d'optimiser le nombre de points d'arrosage par unité surfacique de l'aire d'arrosage, en conservant une section de passage nominale d'orifice relativement importante et en diminuant donc leur sensibilité au bouchage.

Selon d'autres caractéristiques de l'invention, le distributeur comporte :
- une structure plane dans laquelle sont formés, suivant ledit motif, les orifices ;
- une série de goulottes inter-communiquantes dans lesquelles sont formés, suivant ledit motif, les orifices.

Au sens de la présente invention, par "goulotte" on entend des profilés à section anguleuse et à fond plat, comme représenté, ou à section arrondie, par exemple des tubes, dont les parties inférieures sont sensiblement tangentes à un même plan horizontal.

La présente invention a également pour objet une colonne de distillation, notamment d'air, équipée d'un tel distributeur associé à un dispositif d'échange de chaleur et de matière du type à garnissages, avantageusement à garnissages structurés.

D'autres caractéristiques et avantages de la présente invention ressortiront de la description suivante de modes de réalisation, donnés à titre illustratif mais nullement limitatif, faite en relation avec les dessins annexés, sur lesquels:
- les figures 1 et 3 sont des vues en plan de deux modes de réalisation principaux de distributeurs de liquide pour colonnes de distillation;
- les figures 2 et 4 sont des vues en coupe suivant les plans de coupe II-II et IV-IV des figures 1 et 3, respectivement ;
- la figure 5 est une vue schématique en plan d'un distributeur classique montrant la répartition des passages de liquide ;
- la figure 6 est une vue analogue à la figure 5 illustrant une répartition des passages de liquide selon un mode de réalisation de l'invention appliquée à un distributeur à structure plane ;
- la figure 7 est une vue en plan analogue à la figure 6 montrant une répartition des passages de liquide dans un distributeur à goulottes selon un mode de réalisation de l'invention ; et
- la figure 8 est une vue en plan d'une variante de réalisation d'un distributeur à goulottes selon l'invention.

Comme on le voit dans le mode de réalisation de la figure 6, dans un distributeur du type à structure plane selon l'invention l'on retrouve avantageusement, dans la partie centrale de la structure 2, une distribution d'orifices 4 suivant un motif régulier, ici orthogonal, chacun au centre de gravité d'une zone surfacique individuelle 6 régulière, ici quadrangulaire. Selon un aspect de l'invention, le motif central d'orifices 4 avec un maillage de zones surfaciques régulières 6 est complété, à sa périphérie, par un motif désordonné d'orifices 4' disposés au centre de gravité de zones surfaciques 6' ayant, dans le mode de réalisation représenté, majoritairement sensiblement la même surface que les zones régulières 6, mais de formes irrégulières, les orifices 4' ayant ici majoritairement la même section que les orifices 4 du motif régulier. On a toutefois représenté, sur la gauche de la figure 6, deux orifices 4'' de même section, inférieure à celle des orifices 4 et 4', auxquels sont associés des zones surfaciques 6'' ayant une surface réduite proportionnelle à la section réduite des orifices 4''. Pour une aire totale d'arrosage déterminée, en fonction du diamètre de la colonne, et pour un diamètre nominal d'orifice 4, 4' prédéterminé, typiquement compris entre 3 et 5 mm, on définit un nombre total d'orifices identiques 4, 4' et donc une aire correspondante de surface individuelle, les formes des surfaces individuelles périphériques 6' et 6'' étant déterminées par calcul de surfaces pas à pas sur l'aire résiduelle d'arrosage autour de l'aire centrale à surfaces régulières 6. Selon l'invention, d'autres orifices (non représentés) présentant des sections supérieures à celles des orifices 4, 4' ou inférieures à celles des orifices 4'' peuvent être prévus localement, au centre de gravité de surfaces individuelles d'aires correspondant aux sections de ces orifices. Le nombre de sections différentes d'orifices n'excède pas 4, en pratique n'excède pas 3. Le rapport de la plus grande section d'orifice à la plus petite section d'orifice (dans la pratique correspondant à un diamètre de 1 mm) n'excède pas 100, typiquement n'excède pas 50.

Comme on le voit sur la figure 7, dans un mode de réalisation à goulottes disjointes 20, ces dernières sont, selon un aspect de l'invention, dimensionnées et conformées de façon que leurs extrémités libres 200 épousent sensiblement le profil de la virole de colonne 1, au voisinage immédiat de cette dernière, et les surfaces individuelles 6 sont déterminées en fonction de la répartition des orifices 4, de même section nominale, formés dans le fond des goulottes 20, en partant cette fois des extrémités 200, c'est-à-dire des bords latéraux du distributeur. Comme on le voit sur la figure 7, la distribution des orifices 4 est régulière (ici en arcs de cercle et en alignement) sur les parties latérales du distributeur, les zones surfaciques correspondantes étant majoritairement régulières, et cette répartition ramène le problème d'ajustement des surfaces individuelles dans la zone de la goulotte de distribution ou d'équilibrage 21 où, comme dans la zone périphérique de la figure 6, les surfaces individuelles 6' des orifices 4' à pas irrégulier ont des contours variables, déterminés par calcul de surfaces pas à pas et conservent, dans le cas d'orifices 4 et 4' ayant la même section nominale, la même surface que les surfaces régulières 6. Ici aussi a on représenté des orifices 4'' à section réduite par rapport à celle des orifices 4, 4' et associés à des zones surfaciques 6'' également de surface réduite.

Selon la géométrie du distributeur, on peut être amené à déporter des points d'arrosage par rapport aux goulottes 20 dans lesquelles sont pratiqués les orifices calibrés 4. Dans le mode de réalisation de la figure 8, le déversement au voisinage de la virole 1 est ainsi assuré au moins en partie par des déverseurs 41, par exemple du type à débordement, s'étendant au-dessous des goulottes 20 et à l'extérieur de ces dernières, pour ménager des points d'arrosage 4' en dehors des goulottes mais assurant un débit de déversement avantageusement identique à celui des orifices 4 des goulottes en étant chacun alimenté par un orifice 40 ménagé dans une goulotte et ayant la même section que les orifices 4, la répartition des points d'arrosage 4' étant déterminée de la même façon que pour ceux des Figures 6 et 7.

## Revendications

1. Distributeur de liquide pour dispositif d'échange de chaleur et de matière (3) ayant une interface supérieure constituant une aire d'arrosage, comprenant des passages de gaz (5 ; 50) et une pluralité de passages de liquide (4,4',4''), les passages de liquide étant définis par des orifices calibrés (4,4',4'') répartis suivant un motif de points d'arrosage au moins partiellement irrégulier, les orifices (4,4','4'') ayant une section choisie dans un groupe de n sections différentes prédéterminées, n n'excédant pas 4, caractérise en ce que chaque orifice est disposé au centre de gravité d'une surface individuelle (6,6',6'') ayant une aire correspondant à la section de l'orifice associe.

2. Distributeur selon la revendication 1, caractérisé en ce que le rapport entre la section maximum et la section minimum du groupe de n sections est inférieur à 100.

3. Distributeur selon la revendication 1 ou à la revendication 2, caractérisé en ce que n n'excède pas 2.

4. Distributeur selon la revendication 3, caractérisé en ce que les orifices (4,4') ont une section sensiblement constante (n=1).

5. Distributeur selon l'une des revendications précédentes, caractérisé en ce qu'il comporte une structure plane (2) dans laquelle sont formés, suivant ledit motif, les orifices (4,4').

6. Distributeur selon l'une des revendications précédentes, caractérisée en ce qu'il comporte une série de goulottes (20) parallèles intercommuniquantes (21) dans lesquelles sont formés, suivant ledit motif, des orifices à diamètre unique (4).

7. Distributeur selon la revendication 6, caractérisé en ce qu'au moins une partie des goulottes (20) ont une extrémité (200) s'étendant jusqu'au voisinage immédiat d'une virole périphérique (1) enclosant le distributeur et le dispositif d'échange (3).

8. Distributeur selon la revendication 6 ou la revendication 7, caractérisé en ce qu'il comporte au moins un passage de déversement (41) s'étendant entre un orifice (40) formé dans une goulotte (20), et un point d'arrosage (4') décalé de la goulotte.

9. Distributeur selon l'une des revendications 1 à 6, caractérisé en ce qu'il comporte, dans une partie centrale, un motif régulier de points d'arrosage (4).

10. Distributeur selon l'une des revendications 7 et 8, caractérisé en ce qu'il comporte, dans des zones latérales voisines des extrémités (200) des goulottes (20), un motif régulier de points d'arrosage (4).

11. Colonne de distillation comprenant au moins un distributeur selon l'une des revendications précédentes associé à un dispositif d'échange de chaleur et de matière (3) du type à garnissage.

12. Colonne selon la revendication 11, caractérisée en ce que le dispositif d'échange de chaleur et de matière (3), est du type à garnissage structuré.

13. Utilisation d'une colonne selon l'une des revendications 11 et 12 pour la distillation de l'air.

## Claims

1. Liquid-distributor for a heat and matter-exchanging device (3) having an upper interface constituting a sprinkling area comprising gas passages (5; 50) and a plurality of liquid passages (4, 4', 4''), the liquid passages being defined by calibrated orifices (4, 4', 4'') distributed in accordance with a pattern of spraying points which is at least partly irregular, the orifices (4, 4', 4'') having a section which is selected from a group of n different predetermined sections, where n does not exceed 4, characterised in that each orifice is disposed in the centre of gravity of an individual surface (6, 6', 6'') having an area corresponding to the section of the associated orifice.

2. Distributor according to claim 1, characterised in that the ratio between the maximum section and the minimum section of the group of n sections is lower than 100.

3. Distributor according to claim 1 or 2, characterised in that n does not exceed 2.

4. Distributor according to claim 3, characterised in that the orifices (4, 4') have a substantially constant section (n = 1).

5. Distributor according to one of the preceding claims, characterised in that it comprises a plane structure (2) in which the orifices (4, 4') are formed in accordance with the said pattern.

6. Distributor according to one of the preceding claims, characterised in that it comprises a series of intercommunicating (21) parallel chutes (20) in which orifices (4,) with a single diameter are formed in accordance with the said pattern.

7. Distributor according to claim 6, characterised in that at least some of the chutes (20) have an end (200) extending as far as the immediate vicinity of a peripheral sleeve (1) enclosing the distributor and the exchanging device (3).

8. Distributor according to claim 6 or 7, characterised in that it comprises at least one discharge passage (41) extending between an orifice (40) formed in a chute (20), and a sprinkling point (4') offset from the chute.

9. Distributor according to one of claims 1 to 6, characterised in that it comprises, in a central part, a regular pattern of sprinkling points (4).

10. Distributor according to one of claims 7 and 8, characterised in that it comprises, in lateral zones adjoining the ends (200) of the chutes (20), a regular pattern of sprinkling points (4).

11. Distillation column comprising at least one distributor according to one of the preceding claims, which distributor is associated with a heat and matter-exchanging device (3) of the type having packing.

12. Column according to claim 11, characterised in that the heat and matter-exchanging device (3) is of the type having structured packing.

13. Use of a column according to one of claims 11 and 12 for the distillation of air.

## Patentansprüche

1. Flüssigkeitsverteiler für eine Vorrichtung zum Wärme- und Stoffaustausch (3), die eine obere Zwischenschicht mit einer Berieselungsfläche enthält, umfassend Gaskanäle (5; 50) und eine Anzahl von Flüssigkeitsdurchlässen (4, 4', 4'') in Form kalibrierter Öffnungen (4, 4', 4''), die nach einem zumindest teilweise unregelmäßigen Punktmuster für die Berieselung verteilt sind und einen Querschnitt haben, der aus einer Gruppe von n unterschiedlichen, vorher festgelegten Querschnitten ausgewählt ist, und n die Zahl 4 nicht überschreitet, **dadurch gekennzeichnet**, daß jede Öffnung im Schwerpunkt eines eigenen Flächenbereichs (6, 6', 6'') liegt, der eine dem Querschnitt der zugehörigen Öffnung entsprechende Grundfläche hat.

2. Verteiler nach Anspruch 1, dadurch gekennzeichnet, daß das Verhältnis zwischen dem maximalen Querschnitt und dem minimalen Querschnitt der Gruppe von n Querschnitten kleiner als 100 ist.

3. Verteiler nach Anspruch 1 oder Anspruch 2, dadurch gekennzeichnet, daß n die Zahl 2 nicht überschreitet.

4. Verteiler nach Anspruch 3, dadurch gekennzeichnet, daß die Öffnungen (4, 4') einen nahezu konstanten Querschnitt haben (n = 1).

5. Verteiler nach einem der vorhergehenden Ansprüche, dadurch gekennzeichnet, daß er eine ebene Anordnung (2) umfaßt, in der die Öffnungen (4, 4') entsprechend dem Muster ausgebildet sind.

6. Verteiler nach einem der vorhergehenden Ansprüche, dadurch gekennzeichnet, daß er eine Reihe von parallelen, miteinander verbundenen (21) Rinnen (20) umfaßt, in denen Öffnungen entsprechend dem Muster mit einheitlichem Querschnitt (4) ausgebildet sind.

7. Verteiler nach Anspruch 6, dadurch gekennzeichnet, daß mindestens ein Teil der Rinnen (20) einen Endbereich (200) hat, das sich bis in die unmittelbare Nähe einer Ummantelung (1) erstreckt, die den Verteiler und die Austauschvorrichtung (3) umschließt.

8. Verteiler nach Anspruch 6 oder Anspruch 7, dadurch gekennzeichnet, daß er mindestens einen schwenkbaren Überlauf (41) umfaßt, der sich zwischen einer in einer Rinne (20) ausgebildeten Öffnung (40) und einem gegenüber der Rinne versetzten Berieselungspunkt (4') erstreckt.

9. Verteiler nach einem der Ansprüche 1 bis 6, dadurch gekennzeichnet, daß er in einem zentralen Bereich ein regelmäßiges Muster von Berieselungspunkten (4) aufweist.

10. Verteiler nach einem der Ansprüche 7 und 8, dadurch gekennzeichnet, daß er in lateralen, nahe an Endbereichen (200) der Rinnen (20) liegenden Bereichen ein regelmäßiges Muster von Berieselungspunkten (4) aufweist.

11. Destillationssäule, umfassend mindestens einen Verteiler nach einem der vorstehenden Ansprüche, der mit einer Vorrichtung zum Wärme- und Stoffaustausch (3) vom Typ mit Füllung verbunden ist.

12. Säule nach Anspruch 11, dadurch gekennzeichnet, daß die Vorrichtung zum Wärme- und Stoffaustausch (3) vom Typ mit strukturierter Füllung ist.

13. Verwendung einer Säule nach einem der Ansprüche 11 und 12 zur Destillation von Luft.
